# EUROPÄISCHE PATENTSCHRIFT

(11) **EP 0 878 526 B1**
(45) Veröffentlichungstag und Bekanntmachung des Hinweises auf die Patenterteilung: **06.08.2003**
(21) Anmeldenummer: 98108146.6
(22) Anmeldetag: 05.05.1998
(51) Int. Cl.: C09J 7/02

(54) **Doppelseitiges Klebeband und seine Verwendung**
Double sided adhesive tape and use thereof
Ruban adhesif double face et son utilisation

(30) Priorität: 14.05.1997 DE 19720145
(43) Veröffentlichungstag der Anmeldung: 18.11.1998
(73) Patentinhaber: Tesa AG, 20253 Hamburg (DE)
(72) Erfinder: Lühmann, Bernd, Dr., 22846 Norderstedt (DE); Junghans, Andreas, 20251 Hamburg (DE); Otten, Ulrich, 22549 Hamburg (DE)

(56) Entgegenhaltungen:
- EP-A- 0 845 515
- DE-A- 4 339 604

## Beschreibung

Die Erfindung betrifft ein doppelseitiges Klebeband für rückstandsfrei und zerstörungsfrei wiederlösbare Verbindungen, sowie seine Verwendung.

### Stand der Technik

Doppelseitig haftklebrige Selbstklebebänder finden vielfältigen Einsatz für die temporäre und permanente Verklebung unterschiedlichster Materialien und Anwendungen. Ein wesentlicher Vorteil entsprechender Selbstklebebänder ist deren einfache Handhabung und die schnelle Realisierung der Klebbindung. Nachteilig ist häufig die Tatsache, daß entsprechend vorgenommene Verklebungen nicht rückstandsfrei und in vielen Fällen nicht zerstörungsfrei wieder gelöst werden können.

Zahlreiche Klebmassesysteme wurden entwickelt, welche die Herstellung reversibel abschälbarer Selbstklebebänder erlauben. Typische Beispiele für entsprechende Produkte beinhalten u. a.:
- Haftklebmassen auf Basis von Acrylatcopolymeren, welche mittels Suspensionspolymerisation hergestellt werden. Beispielhafte Ausführungsformen sind in **WO 96/18701** "Removable Pressure Sensitive Adhesive and Article" und der hierin zitierten Literatur beschrieben.
- Selbstklebebänder; welche partiell mit Haftklebemasse beschichtet sind und welche durch die partielle Beschichtung reversibel abschälbare Eigenschaften erhalten. Beispielhafte Ausführungsformen siehe z. B. **EP 0 149 135** "Rückstandsfrei wiederablösbare haftklebrige Flächengebilde" und **EP 0 328 925** "Haftklebrige Flächengebilde".
- Zahlreiche weitere Klebmassesysteme, z. B. solche auf Basis von Acrylatcopolymeren, Naturkautschuk-Harz Gemischen, Ethylen-Vinylacetat Copolymeren, um nur einige zu nennen, lassen sich derart in ihrem klebtechnischen Eigenschaftsprofil steuern, daß die Herstellung von Klebebändem mit sehr niedrigen Klebkräften möglich ist.
Typischerweise zeigen vorgenannte Selbstklebebänder bezüglich der zu realisierenden Verklebungsfestigkeiten jedoch nur ein sehr begrenztes Leistungsprofil. Insbesondere die Schäl- und die Kippscherfestigkeiten erreichen nur niedrige Werte.
im Handel erhältlich sind tesa-Power-Strips®. **DE 3.331.016** ("Klebfolie für wiederlösbare Klebbindungen"), **WO 92/11333 // US 5,516,581 // EP 0 563 272** ("Removable AdhesiveTape") und **WO 95/06691 "Stripable foam adhesive tape**" beschreiben unterschiedliche Typen von doppelseitigen **Selbstklebebän dern, welche sich durch Verstrecken im wesentlichen parallel zur Verklebungsebene (in der Verklebungsebene) rückstands- und zerstörungsfrei aus den Klebfugen herauslösen lassen.** Verklebungen sind mit entsprechenden Selbstklebebändern auf gleiche Weise möglich, wie mit herkömmlichen doppelseitig haftklebrigen Selbstklebebändern, mit dem Vorteil, daß die vorgenommenen Verklebungen jederzeit wieder rückstandsfrei und zerstörungsfrei gelöst werden können, dies in vielen Fällen auch von zahlreichen sehr empfindlichen Untergründen, wie z. B. gestrichener Rauhfasertapete. Die erreichbaren Verklebungsfestigkeiten sind in einem breiten Bereich einstellbar. Nachteilig bei entsprechenden Klebebändern ist, daß zum Lösen der Klebbindung ein Teil des Klebebandes aus der Klebfuge hervorstehen muß, welcher als Anfasser zum Herausziehen des Klebebandes aus der Klebfuge genutzt wird. In vielen Fällen ist die Sichtbarkeit eines Teiles des Selbstklebebandes jedoch nicht erwünscht, z. B., wenn bei der Fixierung eines Bildes die Anfasser über den Bilderrahmen herausragen. Weiterhin nachteilig ist, daß vorgenannte Selbstklebebänder über eine ausreichend hohe Reißfestigkeit bei gleichzeitig hoher Dehnung verfügen müssen, um ein sicheres und convenientes Ablösen durch Verstrecken im wesentlichen in der Verklebungsebene zu ermöglichen. Dies gilt insbesondere für doppelseitig haftklebrige Ausführungsformen, da in diesem Fall zum rückstandsund zerstörungsfreien Lösen der Klebbindung das Klebeband simultan von zwei verklebten Oberflächen zu lösen ist, welches besonders hohe Reißfestigkeiten der Klebebänder erfordert. Realisiert werden die hohen Reißfestigkeiten bei gleichzeitig hoher Dehnung durch den Einsatz spezieller besonders dehnfähiger und reißfester Haftklebemassen oder Zwischenträger.

Mehrere Wege sind beschrieben worden, um o. g. Selbstklebebänder derart einzusetzen, daß der Anfasser im Anwendungsfall unsichtbar hinter dem verklebten Gegenstand bleibt, mithin Verklebungen mit verdecktem Anfasser möglich sind. So beschreibt **DE 4.233.872** ("Wiederablösbarer selbstklebender Haken") einen wiederablösbaren, selbstklebenden Haken, welcher den Anfasser verdeckt hinter einer abziehbaren Lasche des Hakenkörpers beläßt. Ähnliche Entwicklungsrichtungen sind in **DE 195 11 288** ("Verwendung eines Klebfolien-Abschnitts für eine rückstandsfreie und beschädigungslos wiederablösbare Verklebung"), **WO 94/21157** ("Article Support using stretch releasing adhesive") beschritten worden. In allen zuvor beschriebenen Fällen ist für eine Verklebung, bei welcher der Anfasser unsichtbar bleiben soll, eine sehr spezielle Vorrichtung nötig, welche während der Applikation den Anfasser verdeckt und ihn zum Ablöseprozeß leicht zugänglich macht. Eine verdeckte Verklebung ist damit nicht allgemein und einfach möglich.

**DE 4.339.604** ("Verwendung eines Streifens einer Klebfolie für eine wiederlösbare Verklebung") beschreibt spezielle rückstandsfrei und zerstörungsfrei wiederablösbare Selbstklebebänder, welche sich im verklebten Zustand vollständig zwischen dem zu verklebendem Objekt und dem Haftgrund befinden und einen Anfasser zum Ablösen nicht benötigen. Die Entklebung erfolgt in vorliegendem Fall durch Ziehen des verklebten Gegenstandes etwa parallel zur Verklebungsebene. Entsprechend vorgenommene Verklebungen bieten mithin den Vorteil, daß die Klebfolie für den Betrachter eines verklebten Gegenstandes vollständig unsichtbar hinter diesem liegt. Ein weiterer Vorteil liegt darin, daß eine breite Anzahl von Verklebungen vorgenommen werden kann und das keine speziellen Vorrichtungen oder Werkzeuge nötig sind, um die Verklebung vorzunehmen und wieder zu lösen. In der Praxis weisen entsprechend vorgenommene Verklebungen jedoch den Nachteil auf, daß sie infolge des speziellen Aufbaus der Selbstklebebänder ausschließlich für Verklebungen geeignet sind, die lediglich eine begrenzte Scherbelastung und insbesondere nur eine sehr begrenzte Kippscherbelastung zulassen. Für viele Applikationen lassen sich entsprechende Selbstklebebänder mithin nicht einsetzen.

**3M Scotch PSL 10 360, Scotch 4656 und Scotch 4658 F** sind beidseitig wiederablösbare Selbstklebebänder auf Basis weich eingestellter haftklebriger Acrylatcopolymere, welche insbesondere für die temporäre Befestigung zu fixierender Gegenstände ausgelobt werden. Eine Wiederablösbarkeit ist durch sehr langsames Abschälen, schnelles Abziehen und durch ruckartiges Abspalten (Abhebeln) möglich.

Nachteilig bei vorgenannten Produkten ist:
- die hohe Belastung der Untergründe beim Abschälprozeß sowie insbesondere beim Abhebeln der verklebten Gegenstände vom Untergrund. Durch die hohe mechanische Belastung beim Wiederablösen ist insbesondere eine Eignung für die Verklebung von wenig festen Materialien, wie z. B. Tapeten, Pappen, vielen Papieren, Gipskarton, zahlreichen furnierten Holzoberflächen, etc. nicht gegeben.

Die Fa. Ritterath bietet unter der Bezeichnung **fix-o-moll® Mega-Klebestrips** ein doppelseitig haftklebriges Selbstklebeband mit Schaumstoffzwischenträger an, welches es ermöglicht, damit vorgenommene Klebbindungen durch Einwirkung von Torsionskräften (Abdrehen) zu lösen. Nachfolgend lassen sich die auf den beiden Verklebungsflächen verbliebenen Klebebandhälften von festen Untergründen, ausgehend von einem im Klebeband integrierten nicht haftklebrigen Anfasserbereich, rückstandsfrei durch Abschälen wiederablösen. Nachteilig an vorgenanntem Produkt sind:
- der komplexe Produktaufbau: genutzt wird ein Produktaufbau mit fünf Funktionsschichten. Ein Schaumstoffzwischenträger ermöglicht das Spalten des Klebebandes bei Einwirken von in der Verklebungsebene einwirkenden Torsionskräften auf den beidseitig verklebten Klebestreifen. Auf den Schaumstoff ist beidseitig eine mit Haftklebemasse beschichtete Polyolefinfolie aufgebracht, welche ein Abschälen der nach dem Spalten der Klebbindung auf den beiden Substratoberflächen vorliegenden Klebebandhälften ermöglicht.
- der Wiederablöseprozeß durch Abschälen von den Haftgründen. Mega-Klebestrips werden nach dem Spalten der Klebbindung durch Torsion bzw. Abdrehen vom Untergrund abgeschält. Abschälen des Klebebandes bewirkt jedoch bei wenig festen Untergründen, wie z. B. gestrichener Rauhfasertapete, vielen Papier- und Pappuntergründen, Gipskarton, strukturierte Vinyltapeten, etc. eine Schädigung selbiger Materialien. Erfahrungsgemäß sind für die Realisierung hoher Verklebungsfestigkeiten gleichfalls hohe Klebkräfte also Schälkräfte notwendige Voraussetzung für eine ausreichende Produktleistung. Gerade dies schließt jedoch ein rückstandsfreies Entfernen der Klebestreifen von empfindlichen Haftgründen sowie zahlreichen vermeintlich ausreichend festen Untergründen aus, oder schränkt dieses doch sehr stark ein.
- Nach dem Abdrehen der Klebestreifen ist der Schaumstoff im Anfasserbereich der **fix-o-moll® Mega-Klebestrips,** welcher durch beidseitiges Aufkaschieren einer Kunststofffolie an einem Ende der Klebestreifen realisiert ist, üblicherweise nicht zertrennt, da hier infolge der Nichtverklebung auf den Substraten keine ausreichenden Torsionskräfte beim Abdrehen einwirken konnten. Wird der zu lösende Gegenstand nachfolgend senkrecht vom Verklebungsuntergrund abgelöst, so spalten durch die einwirkenden Schälkräfte weniger feste Haftgründe und können geschädigt oder gar zerstört werden.

Aus der EP 0 845 515 A2 ist ein Klebeband für eine durch Zug rückstandsfrei und beschädigungslos wiederlösbare Verklebung mit einem Schaumstoffträger bekannt, der einseitig oder beidseitig mit einer Selbstklebemasse beschichtet ist und der
a) auf mindestens einer der beiden Seiten des Schaumstoffträgers eine Selbstklebemasse aufgebracht ist, deren Verhältnis von Reißkraft zu Stripkraft (Abzugskraft) bei einem Abzugswinkel von weniger als 10° zur Verklebungsfläche größer als 1,2 : 1 ist, und
b) der Schaumstoffträger einen E-Modul von unter 16 MPa und eine Dicke von 200 600 µm aufweist.
   Das Klebeband wird durch Ziehen in der Verklebungsebene vom Untergrund gelöst, ohne dass das Klebeband beziehungsweise der Schaumstoffträger reißen oder spalten.

Ziel der vorliegenden Erfindung war es, die vorgenannten Nachteile zu überwinden, insbesondere Selbstklebebänder vorzulegen, welche:
- für rückstandsfrei und zerstörungsfrei wiederablösbare Verklebungen geeignet sind und gleichzeitig im Applikationszustand verdeckt hinter dem verklebten Gegenstand verbleiben und somit eine "unsichtbare" Verklebung erlauben.
- insbesondere keine speziellen Vorrichtungen am zu verklebenden Gegenstand für eine verdeckte Verklebung benötigen.
- kraftvolle Verklebungen ermöglichen, welche sowohl sehr hohe Schälfestigkeiten als auch sehr hohe Scher- und Kippscherfestigkeiten aufweisen.
- ein rückstandsfreies Wiederablösen auch auf empfindlichen Untergründen, wie z. B. gestrichener Rauhfasertapete ermöglichen.
- einen einfachen Produktaufbau besitzen, wobei das Eigenschaftsprofil erfindungsgemässer Klebebänder in weiten Bereichen steuerbar ist.

Erreicht wird dies durch Klebebänder, wie sie näher in den Ansprüchen gekennzeichnet sind, insbesondere durch den Einsatz von durch Verstrecken im wesentlichen in der Verklebungsebene rückstandsfrei und zerstörungsfrei wiederablösbarer Selbstklebemassen in Kombination mit einem Zwischenträger, welcher bei Einwirkung von Torsions- und/oder Hebelkräften und/oder Schälkräften spaltet. Durch Abdrehen bzw. durch Abhebeln oder durch Abschälen wird die Klebbindung in einem ersten Schritt derart gelöst, dass hierdurch ein Spalten des Schaumes bewirkt wird und das Klebeband in zwei Teile spaltet. Hiernach befindet sich sowohl auf dem verklebten Gegenstand als auch auf dem Haftgrund jeweils die ursprünglich auf den jeweiligen Haftgrund aufgebrachte Haftklebemasse mit Resten des zerstörten Zwischenträgers. Beide Klebebandhälften lassen sich nachfolgend durch Verstrecken im wesentlichen in der Verklebungsebene rückstands- und zerstörungsfrei vom Untergrund lösen. Die für erfindungsgemäße Selbstklebebänder nutzbaren Schaumstoffe sind aus einer breiten Palette marktgängiger Qualitäten wählbar.

Vorteilhaft ist dabei auch, daß beim Abschälen oder Abhebeln auch Verklebungen mit nicht ebenen Untergründen gelöst werden können.

Entsprechende Selbstklebebänder lassen sich hervorragend für die rückstandsfrei und zerstörungsfrei wiederablösbare Verklebung von mit ihnen ausgerüsteten Haken, Bildern, Postkarten, Kalendern, Dekorationen, Schildern etc. auch von empfindlichen Untergründen nutzen. Sie sind ebenfalls hervorragend einsetzbar bei vielfältigen Kurzzeit- und Langzeitverklebungen für industrielle Anwendungen, bei denen die verklebten Gegenstände zu einem späteren Zeitpunkt rückstands- und/ oder zerstörungsfrei wieder voneinander getrennt werden sollen, z. B. um ein Recycling, oder eine anderweitige Wiederverwendung der Verklebungspartner zu ermöglichen.

Vorteilhaft ist auch, daß erfindungsgemäß längere Klebeband-Abschnitte verwendet werden können, die beim "klassischen" Abstrippen nicht einsetzbar wären, aufgrund ihrer großen sich beim Strippen ergebenden Dehn-Länge. Damit lassen sich erfindungsgemäß höhere Klebfestigkeiten erreichen, als dies bisher möglich war.

### Detailbeschreibung

### Einsatzmaterialien

### Haftklebemassen

Als Haftklebemassen finden bevorzugt solche auf Basis von Blockcopolymeren Anwendung, besonders bevorzugt enthaltend Polymerblöcke gebildet von Vinylaromaten (A-Blöcke), bevorzugt Styrol, und solchen, gebildet durch Polymerisation von 1,3-Dienen (D-Blöcke), bevorzugt Butadien und Isopren. Sowohl Homo- als auch Copolymerblöcke sind erfindungsgemäss nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D Zweiblockcopolymere vorhanden sein. Blockcopolymere können modifiziert sein, z. B. funktionalisiert durch Umsetzung mit Maleinsäureanhydrid. Blockcopolymere von Vinylaromaten und Isobutylen sind ebenfalls erfindungsgemäss einsetzbar. Sämtliche der vorgenannten Polymere können alleine oder im Gemisch miteinander genutzt werden. Typische Einsatzkonzentrationen für die Styrolblockcopolymere liegen im Bereich zwischen 15 Gew.% und 75 Gew.%, bevorzugt im Bereich zwischen 30 Gew.% und 60 Gew.% besonders bevorzugt im Bereich zwischen 35 Gew.% und 55 Gew.%.

Als Klebrigmacher sind insbesondere geeignet: Kolophonium und seine Derivate, aliphatische, aromatenmodifizierte aliphatische, aromatische und phenolmodifizierte Klebharze um nur einige zu nennen. Einsatzkonzentrationen der Harze liegen typischerweise im Bereich zwischen 15 Gew.% und 75 Gew.%, bevorzugt im Bereich 30 Gew.% und 65 Gew.%, besonders bevorzugt im Bereich zwischen 35 Gew.% und 60 Gew.%.

Als endblockverträgliche Harze (vornehmlich mit den Vinylaromatenblöcken verträgliche Harze) können Homo- und Copolymere von Vinylaromaten, wie z. B. Styrol oder alpha -Methylstyrol, Polyphenylenoxide, aber auch phenylenoxidmodifizierte Harze genutzt werden.

Weitere optimale Abmischkomponenten umfassen Weichmacheröle und Flüssigharze (Einsatzkonzentrationen zwischen 0 und max. ca 35 Gew.%), Füllstoffe (verstärkende und nicht verstärkende), z. B. Siliziumdioxid, insbesondere synthetische Silica, Glas (gemahlen oder in Form von Kugeln), Aluminiumoxide, Zinkoxide, Calciumcarbonate, Titandioxide, Ruße, um nur einige zu nennen, Alterungsschutzmittel (primäre und sekundäre Antioxidantien, Lichtschutzmittel, Antiozonantien, Metalldesaktivatoren etc.). Abmischkomponenten umfassen ebenfalls Polymere, welche insbesondere Auswirkung auf die Ozonbeständigkeit der Blockcopolymere nehmen, wie z. B. Polyvinylacetate und Ethylen-Vinylacetat Copolymere.

Als weitere Polymere können natürliche und synthetische Polymere, wie z. B. Naturkautschuk, synthetische Polyisoprene, Polybutadiene, Polychloroprene, SBR, Kraton Liquid (Shell Chemicals), Polyisobutylene usw. vorhanden sein, welche die vinylaromatenhaltigen Blockcopolymere bis zu ca 50 Gew.% ersetzen können.

Die erfindungsgemäß verwendeten Selbstklebemassen können chemisch, insbesondere strahlenchemisch (z. B. durch UV-Bestrahlung, γ-Bestrahlung oder durch Bestrahlung mittels schneller Elektronen) vernetzt sein.

Erfindungsgemäße Klebmassen sind optional solche, deren Haftklebrigkeit erst durch thermische Aktivierung erzeugt wird.

Geeignete Selbstklebemassen sind neben den zuvor beschriebenen auf Basis vinylaromatenhaltiger Blockcopolymere auch solche, welche über eine für den Ablöseprozeß ausreichende Reißfestigkeit und Kohäsion verfügen. Entsprechende Haftklebemassen können allein oder in Kombination mit solchen auf Basis vinylaromatenhaltiger Blockcopolymere eingesetzt werden. Erfindungsgemäß geeignet sind z. B. haftklebrige Acrylatcopolymere copolymerisiert mit Makromonomeren, wobei die Makromonomere eine Glastemperatur von > +40°C aufweisen. Die hohe Reissfestigkeit entsprechender Copolymere wird wahrscheinlich durch die Assoziation der Makromonomere erreicht. Geeignete Makromonomere sind z. B. methacryloylterminierte Polymethylmethacrylate.

Weitere geeignete Haftklebemassen zusammen mit dehnbaren Folienträgern oder dergleichen sind solche gemäss WO 9211332 und WO 9211333, aber auch WO 9506691 und WO 9707172, auf die ausdrücklich Bezug genommen wird. Die dort beschriebenen Produkte zusammen mit einem erfindungsgemäßen spaltbaren Zwischenträger eignen sich ebenfalls für den Zweck der vorliegenden Erfindung.

Durch Einwirkung von Torsions- und / oder Hebelkräften und / oder Schälkräften spaltende Zwischenträger

Geeignete Zwischenträger, welche unter Einwirkung von Torsions- und / oder Hebelkräften und / oder Schälkräften spalten, beinhalten schaumstoffhaltige Trägermaterialien (Schaumstoffzwischenträger), beispielsweise ein homo- oder copolymeres Olefin, insbesondere Homo- und Copolymere des Ethylens, insbesondere Polyethylene niederer und sehr niederer Dichte (LDPE, LLDPE, VLDPE), Ethylen-Vinylacetat Copolymere, sowie Gemische vorgenannter Polymere. Weitere Polymere können u. a. sein: Polyvinylacetate, Polypropylene, Polyurethane auf Basis aromatischer und aliphatischer Diisocyanate, Polystyrol, schlagzähmodifizierte Polystyrole, PVC, Acrylatcopolymere. Schaumstoffe können vernetzt oder unvernetzt zum Einsatz kommen.

Die Dicken der eingesetzten Schaumstoffe liegen insbesondere zwischen 175 µm und 10 mm, bevorzugt zwischen 250 µm und 5 mm, besonders bevorzugt zwischen 350 µm und 3 mm. Raumdichten betragen 20 bis 400 kg/m³, bevorzugt 25 bis 250 kg/m³, besonders bevorzugt von 25 bis 150 kg/m³. Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe.

### Verankerung der Haftklebemassen

Zur Erzeugung einer ausreichenden Verankerung der eingesetzten Haftklebemassen auf den Schaumstoffen werden diese vorteilhaft bei der Herstellung und /oder vor ihrer Beschichtung mit Haftklebstoff einer Druckvorbehandlung unterzogen. Geeignete Vorbehandlungsverfahren sind u. a. die Fluorvorbehandlung, die Coronavorbehandlung, die Plasmavorbehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Schaumstoff zu reduzieren.

### Vorbehandlung der Schäume

Zur Einstellung der zum Spalten der Klebbindung durch Abdrehen, Abhebeln oder Abschälen benötigten Kräfte, können die schaumstoffhaltigen Zwischenträger erfindungsgemäßer Selbstklebebänder einer Vorbehandlung / Schädigung durch z. B. Perforieren, Zerschneiden oder Stanzen unterzogen werden. Entsprechende Vorbehandlung kann vor oder nach der ersten Beschichtung mit Haftklebemasse durchgeführt werden. Ergebnis der Vorbehandlung sind insbesondere Einschnitte im Schaumstoff, welche die mechanische Festigkeit des Trägers in der Richtung // Ebene reduzieren, in der später die unter Verwendung selbiger Träger erzeugten Selbstklebebänder, durch Abdrehen, Spalten oder abschälen, gelöst werden sollen. Hierdurch ist eine gezielte Steuerung der Ablösekräfte möglich. Beispiele für entsprechende Vorbehandlungen sind: Einschnitte, Stanzungen und Perforationen. Diese können die Gesamtfläche der schaumstoffhaltigen Träger gleichmäßig bedecken oder lediglich in begrenzten Bereichen vorliegen. Sie können eine regelmäßige Struktur bzw. Wiederholfolge aufweisen oder unregelmäßig vorliegen. Einschnitte können vertikal zur Schaumstoffoberfläche oder in definierten anderen Winkeln hierzu vorgenommen werden. Einschnitte können lediglich teilweise oder auch vollständig den schaumstoffhaltigen Träger durchdringen. Sie können einseitig oder beidseitig in den schaumstoffhaltigen Träger eingebracht sein.

### Selbstklebebänder

Erfindungsgemäße Selbstklebebänder enthalten wenigstens einen schaumstoffhaltigen Zwischenträger, welcher beidseitig mit einer Haftklebemasse ausgerüstet ist. Klebebänder spalten kohäsiv nach Einwirkung einer entsprechende Torsions-, Hebel- oder Schälkraft (Spalten der Klebbindung durch Abdrehen, Abhebeln, Abschälen). Die verwendete Klebmasse verfügt über eine ausreichende Reißdehnung und Reißfestigkeit, so daß die nach dem Spalten der Klebbindung auf den Haftgründen verbliebenen Klebebandreste durch Verstrecken im wesentlichen in der Verklebungsebene rückstands- und zerstörungsfrei von diesen wiederabgelöst werden können. Haftklebemassen können von gleicher oder unterschiedlicher Rezeptur sein sowie mit gleichem oder unterschiedlichem Masseauftrag auf beide Klebebandseiten aufgetragen sein. Klebmassen können aus einer oder aus mehreren Klebmasseschichten aufgebaut sein. Z. B. kann eine Klebstoffschicht aus zwei Lagen bestehen, welche beide vinylaromatenhaltige Blockcopolymere als Polymerbasis nutzen, wobei die Blockcopolymere von gleicher oder unterschiedlicher Art sein können. Auch kann auf eine erste Klebstoffschicht enthaltend vinylaromatenhaltige Blockcopolymere eine solche auf Basis weiterer Kautschuke, wie z. B Naturkautschuk oder Polybutadien oder Polyisobutylen oder "Kraton Liquid" (Shell Chemicals) oder Gemische vorgenannter Polymere aufgebracht sein. Die Verklebungsfestigkeit erfindungsgemäßer Selbstklebebänder ist auf für die vorgesehene Anwendung geeigneten Untergründen so hoch, daß sich im wesentlichen keine adhäsive Trennung des Klebebandes beim Lösen der Klebbindung durch Torsion, Abschälen bzw. Abspalten vom Untergrund ergibt.

Haftklebemassen sind dadurch gekennzeichnet, daß ihre Reißdehnungen insbesondere größer als 200%, bevorzugt größer als 350%, besonders bevorzugt größer als 450% betragen.

Reißfestigkeiten der verwendeten Haftklebemassen liegen bei größer 1.5 MPa, bevorzugt bei größer 3 MPa, besonders bevorzugt bei größer 5 MPa.

Schichtstärken der die Reißfestigkeit bestimmenden Haftklebemassen betragen insbesondere ≥ ca 75µm, bevorzugt > 100µm, besonders bevorzugt ≥ 150µm.

Das Verhältnis von Reißkraft zu Stripkraft der Selbstklebebänder ist bei Abzugswinkeln von < 10° gegen die Verklebungsfläche größer als 1,2 : 1, bevorzugt größer als 1,5 : 1, besonders bevorzugt größer als 2 : 1.

### Konfektionierform

Konfektionierformen erfindungsgemäßer Klebebänder umfassen sowohl Klebebandrollen als auch Klebebandstücke definierter Abmessungen, z. B. in Form von Stanzlingen. Klebebandstücke definierter Abmessungen können wahlweise entsprechend **DE 4.428.587** ein ausgeformtes Ende, - etwa ein spitz zulaufendes Ende - aufweisen. Zur Erleichterung des Ablöseprozesses können die Klebestreifen über einen oder mehrere nicht haftklebrige Bereiche verfügen, welche als Anfaßhilfe zum Ablösen der Klebestreifen nach Spalten der Klebbindung dienen. Anfasser können z. B. entsprechend **DE 4.431.914** durch Aufkaschieren einer trennlackierten Anfasserfolie oder eines trennlackierten Trennpapiers auf die Haftklebmasseoberfläche realisiert sein. Die Inertisierung der Klebmasseoberfläche kann außer durch Abdeckung mittels dünner Folien aus z. B. Kunststoff oder durch Abdeckung mit dünnen Papieren auch über eine Lackierung oder Bedruckung der zu inertisierenden Haftklebmassebereiche oder durch Auftragung eines nicht haftklebrigen pulverförmigen Materials erreicht werden.

Typisch Anfasserformen beinhalten ein- oder beidseitig nicht haftklebrige Bereiche, welche in den Randbereich der Klebestreifen integriert sind. Diese sind bei rechteckigen Stanzlingsformen bevorzugt an deren kurzen Kanten realisiert. Weitere Möglichkeiten schließen z. B. ein- oder beidseitige nicht haftklebrige Eckbereiche ein.

Zur Realisierung eines zerstörungsfreien Wiederablöseprozesses von besonders empfindlichen Untergründen ist die Verwendung von Schaumstoffzwischenträgern mit niedrigem Raumgewicht und damit niedrigen Spleißfestigkeiten vorteilhaft. In Kombination mit vorgenannten Schaumstoffen können Anfasser unterschiedlichster Geometrie verwendet werden, ohne daß eine merkliche Schädigung von z. B. gestrichener Rauhfasertapete beobachtet wird. Bei Polyolefinschaumstoffen mit Raumdichten ab ca. 67 kg/m³ sind für das rückstandsfreie Ablösen auch von empfindlichen Untergründen spezielle Anfasserformen zu bevorzugen. Erfindungsgemäß lassen sich bei rechteckigen Klebestreifengeometrien insbesondere nutzen:
- Einseitig nicht haftklebrige Eckbereiche, wobei benachbarte oder gegenüberliegende Ecken auf entgegengesetzten Klebestreifenoberflächen nicht haftklebrig eingestellt sind.
- Beidseitig nicht haftklebrige Eck- oder Kantenbereiche, bei welchen die verwendeten Schaumstoffe im Anfasserbereich parallel zur Schaumstoffoberfläche etwa mittig im Schaumstoff eingeschnitten sind.

### Herstellung

Erfindungsgemäße Klebebänder lassen sich durch Lösemittelbeschichtung, Kaltoder Heißlaminierung und durch Schmelzbeschichtung der zu verwendenden Schaumstoffe herstellen. Für Schichtstärken > ca 75µm ist die Laminierung bzw. die Schmelzbeschichtung aus ökonomischen Gründen i. a. vorzuziehen. Die Bearbeitung der schaumstoffhaltigen Träger durch z. B. Perforieren, Zerschneiden oder Stanzen kann mittels der üblichen, dem Fachmann bekannten Verfahren, z. B. mechanisch mittels Klingenschnitt, durch Verwendung einer Rotationsstanze, durch Nutzung von Perforationsmessern oder thermisch durch z. B. Laserperforation vorgenommen werden. Entsprechende Bearbeitung kann sowohl am schaumstoffhaltigen Träger selbst oder am einseitig mittels Haftklebemasse beschichteten Material durchgeführt werden.

### Prüfmethoden

### Kippscherfestigkeit

Zur Bestimmung der Kippscherfestigkeit wird die zu prüfende Klebstoff-Folie mittig auf eine hochglanzpolierte quadratische Stahlplatte der Abmessung 40mm * 40mm * 3mm (Höhe * Breite * Dicke) verklebt. Die Stahlplatte ist rückseitig mittig mit einem 10cm langen Stahlstift versehen, welcher vertikal auf der Plattenfläche sitzt. Die erhaltenen Probekörper werden mit einer Kraft von 100N auf den zu prüfenden Haftgrund verklebt (Andruckzeit = 5sec) und 5 min im unbelasteten Zustand belassen. Nach Beaufschlagung der gewählten Kippscherbelastung durch Anhängen eines Gewichtes (Hebelarm und Masse des Gewichtes wählbar) wird die Zeit bis zum Versagen der Verklebung ermittelt (Prüfklima = Standardklima: T = 23°C; Luftfeuchte = 50±5 %).

### Torsions- (Abdreh-)festigkeit (= Bestimmung des zum Lösen der Klebbindung benötigten Drehmomentes)

Zur Bestimmung des zum Lösen der Klebbindung mittels Torsion benötigten Drehmomentes wird die zu prüfende Klebstoff-Folie derart auf eine hochglanzpolierte rechtwinklige Stahlplatte der Abmessung 250mm * 40mm * 3mm (Länge * Breite * Dicke) verklebt, daß der Schwerpunkt des Klebebandstreifens auf einer 3,1 mm durchmessenden kreisrunden Öffnung in der Stahlplatte liegt, welche mittig 50mm von einem kurzen Ende der Platte entfernt eingebracht ist. Der erhaltenen Probekörper wird mit einer Kraft von 100N derart auf eine zweite Stahlplatte der Abmessungen 50mm * 50mm * 3mm (Länge = Breite * Dicke) verklebt (Andruckzeit = 5sec), daß ein 3 mm durchmessender kreisrunder Stahlstift in der zweiten Platte in die kreisrunde 3,1mm durchmessende Öffnung der ersten Platte ragt. Zur Berechnung des Drehmomentes, welches benötigt wird um die Klebbindung zu lösen, wird die maximale Kraft ermittelt, welche an der rechtwinkligen Stahlplatte in 200 mm Entfernung vom Drehpunkt beim Abdrehen gemessen wird. Angegeben wird das zum Spalten der Klebbindung benötigte Drehmoment sowie die Bruchart (Prüfklima = Standardklima: T = 23°C; Luftfeuchte = 50±5 %; Konditionierzeit min. 15 min).

Untersuchung auf zerstörungs- und rückstandsfreies Wiederablösen durch Abdrehen des verklebten Gegenstandes vom Verklebungsuntergrund und nachfolgendem Ablösen der Klebebandhälften durch Verstrecken derselben im wesentlichen in der Verklebungsebene.

### Beurteilung der für den Abdrehprozeß anzuwendenden Kraft beim Ablösen eines Power-Strips System-Haken

### a] Polystyrol / Stahl-Verklebung

Zur Beurteilung der rückstandfreien Wiederablösbarkeit von festen Untergünden wird die zu prüfende Klebstoff-Folie der Abmessungen 40mm * 20 mm (Länge * Breite) mittig auf eine hochglanzpolierte quadratische Stahlplatte der Abmessung 100mm * 100mm * 3mm (Höhe * Breite * Dicke) verklebt. In einem zweiten Schritt wird eine Basisplatte der tesa Power-Strips System-Haken vollfächig auf die zu prüfenden Klebstreifen aufgebracht und der Klebverbund für 5 Sekunden mit einer Andruckkraft von 100N beaufschlagt. Danach wird ein Hakenkörper der Form "arkade" passend zum tesa Power-Strips System-Haken (Bestellnummer 58011) auf die Basisplatte aufgesteckt. Nach einer Konditionszeit von mindestens 15 min bei RT wird die Klebbindung durch Abdrehen des Hakens gelöst. Beurteilt wird die Bruchart, die zum Spalten der Klebbindung benötigte Kraft (qualitativ) sowie die Möglichkeit des rückstandsfreien Wiederablösens der Klebebandreste.

### b] Verklebung von Polysryrolplatten auf gestrichene Rauhfasertapete

Die Probenpräparation erfolgt entsprechend a]. Beurteilt wird die Bruchart, die Möglichkeit des rückstandsfreien Wiederablösens der Klebebandreste von beiden Haftgründen sowie Vorliegen und Art möglicher Beschädigungen der gestrichenen Rauhfasertapete (Tapete: Erfurt Körnung 52; Farbe: Herbol Zenit LG; Tapete verklebt auf Preßspanplatte).

### Untersuchung auf rückstandsfreies Wiederablösen durch Abhebeln des verklebten Gegenstandes vom Verklebungsuntergrund

Zur Bestimmung der zum Spalten einer Klebbindung aufzuwendenden Kraft wird der zu untersuchende Klebebandstreifen derart mittig auf das obere Ende einer 200 mm * 200 mm * 20 mm (Breite * Höhe * Dicke) messenden, mit einem Acryllack behandelte Buchenholzplatte, verklebt, daß das Selbstklebeband an die obere Kante des Holzuntergrundes angrenzt. Ein lackierter Buchenholzstab der Abmessungen 200 mm * 40 mm * 20 mm (Länge * Breite * Dicke) wird bündig mit einer Andruckkraft von 100 N auf die Buchenholzplatte verklebt. Detektiert wird die Kraft, welche zum Spalten der Klebbindung nötig ist, die Bruchart sowie die Möglichkeit des rückstandsfreien Wiederablösens der Klebebandreste (Prüfklima = Standardklima: T = 23°C; Luftfeuchte = 50±5 %; Konditionierzeit min. 15 min).

### Untersuchung auf rückstandsfreies Wiederablösen durch Abschälen des verklebten Gegenstandes vom Verklebungsuntergrund

Zur Bestimmung der zum Abschälen einer Klebbindung aufzuwendenden Kraft wird der zu untersuchende Klebebandstreifen auf eine hochglanzpolierte quadratische Stahlplatte der Abmessung 100 mm * 100 mm * 3 mm (Höhe * Breite * Dicke) verklebt. In einem zweiten Schritt wird eine 50 µm dicke Aluminiumfolie auf die zweite Seite des Klebebandstreifens mit einer Andruckkraft von 100 N verklebt (Andruckzeit = 5 sec.). Die Aluminiumfolie wird nachfolgend unter einem Winkel von 90° zur Verklebungsebene mit einer Abzugsgeschwindigkeit von 300 mm/min abgeschält. Detektiert wird die Bruchart sowie die Schälkraft als Funktion des Schälweges (Prüfklima = Standardklima: T = 23°C; Luftfeuchte = 50±5 %; Konditionierzeit min. 15 min).

### Beispiel 1

Auf unten gelistete Schaumstoffe wird beidseitig eine Haftklebemasse bestehend aus 100 Tln. SIS Blockcopolymer (Vector 4211, Exxon), 100 Tln. eines Pentaesters von teilhydriertem Kolophonium (Foralyn 110, Hercules) und 1 Tl. eines primären Antioxidantes (Irganox 1010, Ciba Additive) {= Rezeptur 1} durch Kaltlamination aufgebracht. Hierzu wird der gewählte Schaumstoff auf den auf silikonisiertem Trennpapier vorliegenden Haftklebstoff aufgelegt, danach mit einer gummibeschichteten Stahlwalze von 25 cm Breite bei einem Anpreßdruck von 50 N fünf mal überrollt. Das so erhaltene Zwischenprodukt wird in identischer Weise auf der zweiten Seite mit Haftklebstoff beschichtet. Eine ausreichende Verankerung der Haftklebemassen auf dem Schaum wird durch vorherige beidseitige Coronabehandlung der Schaumstoffe erreicht (Vorbehandlungsleistung ca. 40 Wmin/m²). Prüfungen werden nach 24-stündiger Konditionierung der so erhaltenen Muster im Klimaraum (50 % rel. Feuchte, T = RT = 23°C) durchgeführt. Untersucht wurden Prüfkörper (Klebstoff-Folien) der Abmessungen 40 mm * 20 mm (Länge * Breite), welche durch Ausstanzen erhalten wurden. Ermittelt wurde das Drehmoment zum Lösen der Klebbindung. Weiter wurde geprüft, ob ein rückstandsfreies Wiederablösen durch Verstreckung der Klebebandreste parallel zu den Verklebungsuntergründen möglich ist. Es ergeben sich nachfolgende Eigenschaften:

| **Musterbe- zeichnung** | **Schaumstoff Handelsname** | **Schaumstoff Art** | **Hersteller / Lieferant** |
|---|---|---|---|
| 01-01 | Alveolit TA 1501 | PE, vernetzt | Alveo AG |
| 01-02 | Alveolit TA 1501.5 | PE, vernetzt | Alveo AG |
| 01-03 | Alveolit TA 1502 | PE, vernetzt | Alveo AG |

| **Muster- bezeichnung** | **Schaumdicke in µm** | **Raumgewicht in kg/m**^{**3**} | **Klebmasseauftrag Seiten A // B** | **Klebmasse- rezeptur** |
|---|---|---|---|---|
| 01-01 | 1000 | 67 | 300 // 300 g/m² | {1} |
| 01-02 | 1500 | 67 | 300 // 300 g/m² | {1} |
| 01-03 | 2000 | 67 | 300 // 300 g/m² | {1} |

| **Muster- bezeichnung** | **Drehmoment zum Spalten der Klebbindung Stahl // Stahl** | **Schaum spaltet ?** | **Reste beidseitig rückstandsfrei von Stahluntergründen abstrippbar?** | **Kippscherfestigkeit Stahl // Stahl*** |
|---|---|---|---|---|
| 01-01 | 2,6 Nm | ja, kohäsiv | ja | > 30 Tage |
| 01-02 | 2,3 Nm | ja, kohäsiv | ja | > 30 Tage |
| 01-03 | 2,6 Nm | ja, kohäsiv | ja | > 30 Tage |

| | | | | |
|---|---|---|---|---|
| *** Hebelarm = 2 cm; Belastung = 5 N; T = 23 °C; Messung nach 30 Tagen abgebrochen** | | | | |

Sämtliche Klebebandmuster ermöglichen Verklebungen, welche hohe Kippscherfestigkeiten aufweisen. Sie eignen sich damit z. B. für den Einsatz in selbstklebenden Haken. Beim Abdrehen wird in allen Fällen ein kohäsives Spalten der Schaumstoffträger beobachtet. Die auf den beiden Stahluntergründen verbliebenen Klebebandhälften lassen sich nachfolgend rückstandsfrei durch Verstrecken im wesentlichen in der Verklebungsebene ablösen. Hierzu ergreift man die jeweilige Klebebandhälfte an einer ihrer Ecken, löst diese einige mm ab, um einen sicheren Halt der Klebebänder zwischen Daumen und Zeigefinger zu ermöglichen. Die Klebebandhälften lassen sich nachfolgend leicht rückstandsfrei durch Verstrecken im wesentlichen in der Verklebungsebene ablösen. Ein signifikanter Einfluß der Dicke der verwendeten Schaumstoffe auf die Versuchsergebnisse konnte im untersuchten Dickenbereich nicht nachgewiesen werden.

### Beispiel 2a

Entsprechend Bspl. 1 werden drei Ethylen-Vinylacetatcopolymer enthaltende Schaumstoffe mit unterschiedlichem Raumgewicht sowie drei Schaumstoffe mit unterschiedlichem Vinylacetatgehalt untersucht. Genutzt wurden Prüfkörper (Klebstoff-Folien) der Abmessungen 40 mm * 20 mm (Länge * Breite), welche durch Ausstanzen erhalten wurden. Es ergeben sich nachfolgende Eigenschaften:

| **Musterbe- zeichnung** | **Schaumstoff Handelsname** | **Schaumstoff Art** | **Hersteller / Lieferant** |
|---|---|---|---|
| 02-01 | Alveolit TEE 1002 | EVAc, vemetzt | Alveo AG |
| 02-02 | Alveolit TEE 1501.5 | EVAc, vemetzt | Alveo AG |
| 02-03 | Alveolit TEE 3002 | EVAc, vemetzt | Alveo AG |
| 02-04 | Alveolit TA 1501.5 | PE, vernetzt | Alveo AG |
| 02-05 | Alveolit TE 1501.5 | EVAc, vemetzt | Alveo AG |

| **Muster- bezeichnung** | **Schaumdicke in µm** | **Raumgewicht in kg/m**^{**3**} | **Klebmasseauftrag Seiten A // B** | **Klebmasse- rezeptur** |
|---|---|---|---|---|
| 02-01 | 2000 | 100 | 300 // 300 g/m² | {1} |
| 02-02 | 1500 | 67 | 300 // 300 g/m² | {1} |
| 02-03 | 2000 | 33 | 300 // 300 g/m² | {1} |
| 02-04 | 1500 | 67 | 300 // 300 g/m² | {1} |
| 02-05 | 1500 | 67 | 300 // 300 g/m² | {1} |

| **Muster- bezeichnung** | **Drehmoment zum Spalten der Klebbindung** | **Schaum spaltet ?** | **Reste beidseitig rückstandsfrei von Stahluntergründen abstrippbar ?** | **Kippscherfestigkeit Stahl // Stahl*** |
|---|---|---|---|---|
| 02-01 | 4,0 Nm | ja | ja | > 30 Tage |
| 02-02 | 3,0 Nm | ja | ja | > 30 Tage |
| 02-03 | 1,4 Nm | ja | ja | > 30 Tage |
| 02-04 | 2,3 Nm | ja | ja | > 30 Tage |
| 02-05 | 2,5 Nm | ja | ja | > 30 Tage |

| | | | | |
|---|---|---|---|---|
| *** Hebelarm = 2 cm; Belastung = 5 N; T = 23 °C; Messung nach 30 Tagen abgebrochen** | | | | |

Analog zu den Versuchen in Bspl. 1 zeigen sämtliche Mustern beim Abdrehen ein kohäsives Spalten der Schaumstoffträger. Die auf den beiden Untergründen verbliebenen Klebebandhälften lassen sich nachfolgend, analog zu Bspl. 1, rückstandsfrei durch Verstrecken im wesentlichen in der Verklebungsebene von beiden Untergründen ablösen. Eine Verringerung der Raumdichte der verwendeten Schäume hat einen merklichen Einfluß auf die Kräfte, die zum Spalten der Klebstoff-Folie nötig sind. Eine Erhöhung des EVAc-Gehaltes der verwendeten Schaumstoffe (Alveolit TA: EVAc-Gehalt < 0,5%; Alveolit TE: EVAc-Gehalt ca. 7%; Alveolit TEE: EVAc-Gehalt ca. 14% lt. Herstellerangabe) hat gleichfalls einen signifikanten Einfluß auf die Kräfte, die zum Spalten der Klebstoff-Folien nötig sind. Infolge der hohen Verklebungsfestigkeit (Kippscherstandzeiten) eignen sich o. g. Klebebänder ebenfalls gut für die Verwendung in z. B. selbstklebenden Haken.

### Beispiel 2b

Eine unlackierte Buchenholzplatte der Abmessungen 152 mm * 102 mm * 6 mm, auf deren Vorderseite eine Postkarte der Abmessungen 150 mm * 100 mm (Breite * Höhe) aufgebracht ist, wird mit einem Klebestreifen der Musterbezeichnung 02-04 (siehe Bspl. 2a; Abmessungen des Klebestreifens = 20 mm * 40 mm (Breite * Höhe)) auf eine acryllackbeschichtete Holztür verklebt. Der Klebestreifen wird hierzu nach Entfernen eines ersten Trennpapieres derart mittig auf die Rückseite der Buchenholzplatte fixiert, daß die lange Seite des Klebestreifens horizontal verläuft. Nach Abziehen des zweiten Trennpapieres wird die Buchenholzplatte mit festem Handandruck auf die Tür verklebt. Durch Abdrehen läßt sich die Klebbindung lösen. Der verwendete Klebestreifen spaltet hierbei kohäsiv im Schaum. Klebebandreste lassen sich durch Verstrecken in den Verklebungsebenen rückstands- und zerstörungsfrei in einem Stück von beiden Verklebungsuntergründen ablösen. - Das Experiment wird mit einem Klebestreifen wiederholt, dessen haftklebrige Oberfläche in gegenüberliegenden Eckbereichen jeweils einseitig durch Auflegenje einer dreieckigen 4 mm * 4 mm * 5,7 mm messenden 25µm starken Polyesterfolie (Hostaphan RN 25; Fa. Hoechst) inertisiert wurde. Beim Abdrehen der Buchenholzplatte spaltet der Klebebandstreifen kohäsiv im Schaumstoff. Die auf den jeweiligen Haftgründen verbleibenden Klebebandreste lassen sich leicht, ausgehend von den integrierten Anfasserbereichen, durch Verstrecken im wesentlichen in der Verklebungsebene von beiden Untergründen ablösen.

### Beispiel 3

Analog Bspl. 1 wird ein Polyethylenschaum vom Raumgewicht 67 kg/m³ und einer Dicke von 1,5 mm (Alveolit TA 1501.5) mit Haftklebemasse der Rezeptur 1 in unterschiedlicher Dicke beschichtet. Untersucht wurden Prüfkörper (Klebstoff-Folien) der Abmessungen 40 mm * 20 mm (Länge * Breite), welche durch Ausstanzen erhalten wurden. Es ergeben sich nachfolgende Produkteigenschaften:

| **Musterbe- zeichnung** | **Schaumstoff Handelsname** | **Schaumstoff Art** | **Hersteller / Lieferant** |
|---|---|---|---|
| 03-01 | Alveolit TA 1501.5 | PE, vemetzt | Alveo AG |
| 03-02 | Alveolit TA 1501.5 | PE, vemetzt | Alveo AG |
| 03-03 | Alveolit TA 1501.5 | PE, vemetzt | Alveo AG |
| 03-04 | Alveolit TA 1501.5 | PE, vemetzt | Alveo AG |
| 03-05 | Alveolit TA 1501.5 | PE, vemetzt | Alveo AG |

| **Muster- bezeichnung** | **Schaumdicke In µm** | **Raumgewicht in kg/m**^{**3**} | **Klebmasseauftrag Seiten A // B** | **Klebmasse- rezeptur** |
|---|---|---|---|---|
| 03-01 | 1500 | 67 | 50 // 50 g/m² | {1} |
| 03-02 | 1500 | 67 | 100 // 100 g/m² | {1} |
| 03-03 | 1500 | 67 | 200 // 200 g/m² | {1} |
| 03-04 | 1500 | 67 | 300 // 300 g/m² | {1} |
| 03-05 | 1500 | 67 | 500 // 500 g/m² | {1} |

| **Muster bezeichnung** | **Drehmoment zum Spalten der Klebbindung** | **Schaumspaltet ?** | **Reste beidseitigrückstandsfrei von Stahluntergründen abstrippbar ?** | **Kippscherfestigkeit Stahl // Stahl*** |
|---|---|---|---|---|
| 02-01 | 2,2 Nm | ja | nein | > 30 Tage |
| 02-02 | 2,4 Nm | ja | nein | > 30 Tage |
| 02-03 | 2,3 Nm | ja | ja | > 30 Tage |
| 02-04 | 2,3 Nm | ja | ja | > 30 Tage |
| 02-05 | 2,5 Nm | ja | ja | > 30 Tage |

| | | | | |
|---|---|---|---|---|
| *** Hebelarm = 2 cm; Belastung = 5 N; T = 23 °C; Messung nach 30 Tagen abgebrochen** | | | | |

Analog zu den Versuchen in Bspl. 1 wird bei sämtlichen Mustern beim Abdrehen ein kohäsives Spalten der Schaumstoffträger beobachtet. Die auf den beiden Untergründen verbliebenen Klebebandhälften lassen sich bei Klebmasseaufträgen von > 100 g/m² nachfolgend rückstandsfrei durch Verstrecken im wesentlichen in der Verklebungsebene wiederablösen. Ein rückstandsfreies Ablösen gelingt dagegen infolge zu niedriger Reißfestigkeiten der Haftklebemassen nicht bei Masseaufträgen von beidseitig ≤ 100g/m².

### Beispiel 4

Entsprechend Bspl. 1 werden fünf Polyethylenschäume von unterschiedlichem Raumgewicht, ein PVC-Schaum und ein Polyurethanschaum, vergleichend untersucht. Erstellt wurden Prüfkörper (Klebstoff-Folien) der Abmessungen 40 mm * 20 mm (Länge * Breite), welche durch Ausstanzen erhalten wurden. Es ergeben sich nachfolgende Eigenschaften:

| **Musterbe- zeichnung** | **Schaumstoff Handelsname** | **Schaumstoff Art** | **Hersteller / Lieferant** |
|---|---|---|---|
| 04-01 | Alveolit TA 0402 | PE, vemetzt | Alveo AG |
| 04-02 | Alveolit TA 0501.5 | PE, vemetzt | Alveo AG |
| 04-03 | Alveolit TA 1001.6 | PE, vemetzt | Alveo AG |
| 04-04 | Alveolit TA 1501.5 | PE, vemetzt | Alveo AG |
| 04-05 | Alveolit TA 3002 | PE, vemetzt | Alveo AG |
| 04-06 | PVCW-Schaumstoff D.2 weiß | PVC-W | Pegulan |
| 04-07 | Inducon S 260- 1,5 mm | PUR | Mayser |

| **Muster- bezeichnung** | **Schaumdicke in µm** | **Raumgewicht in kg/m**^{**3**} | **Klebmasseauftrag Seiten A // B** | **Klebmasse- rezeptur** |
|---|---|---|---|---|
| 04-01 | 2000 | 250 | 300 // 300 g/m³ | {1} |
| 04-02 | 1500 | 185 | 300 // 300 g/m³ | {1} |
| 04-03 | 1600 | 95 | 300 // 300 g/m³ | {1} |
| 04-04 | 1500 | 67 | 300 // 300 g/m³ | {1} |
| 04-05 | 2000 | 33 | 300 // 300 g/m³ | {1} |
| 04-06 | 2000 | 200 | 300 // 300 g/m³ | {1} |
| 04-07 | 1700 | 390 | 300 // 300 g/m³ | {1} |

| **Muster bezeichnung** | **Drehmoment zum Spalten der Klebverbindung** | **Schaum spaltet ?** | **Reste beidseitig rückstandsfrei abstrippbar ?** |
|---|---|---|---|
| 04-01 | 5,0 Nm | nein | nein |
| 04-02 | 5,2 Nm | nein | nein |
| 04-03 | 3,9 Nm | ja | ja |
| 04-04 | 2,3 Nm | ja | ja |
| 04-05 | 0,8 Nm | ja | ja |
| 04-06 | 4,0 Nm | ja | ja |
| 04-07 | 3,8 Nm | ja | ja |

Klebebänder, welche zum Lösen der Klebbindung ein Drehmoment von ca 4 Nm benötigen, spalten in vorliegender Versuchsreihe beim Ablöseprozeß analog zu den Beispielen in zuvor beschriebenen Versuchen kohäsiv im Schaumstoff. Die auf den beiden Untergründen verbliebenen Klebebandhälften lassen sich nachfolgend entsprechend Bspl. 1 rückstandsfrei durch Verstrecken im wesentlichen in der Verklebungsebene ablösen. Muster, welche Drehmomente von ≥ ca. 5 Nm aufweisen, ließen sich unter den herauf geführten Bedingungen nicht entsprechend lösen.

### Beispiel 5

Für nachfolgend gelistete Klebebandmuster, welche entsprechend Bspl. 1 erstellt sind, werden vergleichend die rückstandsfreie Wiederablösbarkeit bei Verklebung von Polystyrolplatten auf Stahl sowie bei Verklebung von Polystyrolplatten auf gestrichener Rauhfasertapete ermittelt. Genutzt werden Prüfkörper (Klebstoff-Folien) der Abmessungen 40 mm * 20 mm (Länge * Breite). Verklebungen werden durch Abdrehen der Polystyrolplatten gelöst. Es ergeben sich nachfolgende Versuchsergebnisse:

| **Musterbezeichnung** | **Schaumstoff Handelsname** | **Schaumstoff Art** | **Hersteller / Lieferant** |
|---|---|---|---|
| 05-04-05 | Alveolit TA 3002 | PE, vernetzt | Alveo AG |
| 05-02-03 | Alveolit TEE 3002 | EVAc, vernetzt | Alveo AG |
| 05-04-04 | Alveolit TA 1501.5 | PE, vernetzt | Alveo AG |
| 05-02-05 | Alveolit TE 1501.5 | EVAc, vernetzt | Alveo AG |
| 05-02-02 | Alveolit TEE 1501.5 | EVAc, vernetzt | Alveo AG |
| 05-04-03 | Alveolit TA 1001.6 | PE, vernetzt | Alveo AG |
| 05-02-01 | Alveolit TEE 1002 | EVAc, vernetzt | Alveo AG |
| 05-04-02 | Alveolit TA 0501.5 | PE, vernetzt | Alveo AG |
| 05-04-01 | Alveolit TA 0402 | PE, vernetzt | Alveo AG |

| **Musterbezeichnung** | **Schaumdicke in µm** | **Raumgewicht in kg/m**^{**3**} | **Klebmasseauftrag Seiten A // B** | **Klebmasserezeptur** |
|---|---|---|---|---|
| 05-04-05 | 2000 | 33 | 300 // 300 g/m² | {1} |
| 05-02-03 | 2000 | 33 | 300 // 300 g/m² | {1} |
| 05-04-04 | 1500 | 67 | 300 // 300 g/m² | {1} |
| 05-02-05 | 1500 | 67 | 300 // 300 g/m² | {1} |
| 05-02-02 | 1500 | 67 | 300 // 300 g/m² | {1} |
| 05-04-03 | 1600 | 95 | 300 // 300 g/m² | {1} |
| 05-02-01 | 2000 | 100 | 300 // 300 g/m² | {1} |
| 05-04-02 | 1500 | 185 | 300 // 300 g/m² | {1} |
| 05-04-01 | 2000 | 250 | 300 // 300 g/m² | {1} |

| **Musterbezeichnung** | **Drehmoment zum Spalten der Klebbindung (Stahl // Polystyrol)** | **Schaum spaltet ?** | **Reste beidseitig rückstandsfrei abstrippbar ? (Polystyrol-Stahl)** | **Leichtigkeit beim Ablösen (Spalten) der Stahl / Polystyrol- Verklebung** |
|---|---|---|---|---|
| 05-04-05 | 0.8 Nm | ja | ja | sehr leicht |
| 05-02-03 | 1,4 Nm | ja | ja | sehr leicht |
| 05-04-04 | 2,3 Nm | ja | ja | leicht |
| 05-02-05 | 2,5 Nm | ja | ja | leicht |
| 05-02-02 | 3,0 Nm | ja | ja | leicht |
| 05-04-03 | 3,9 Nm | ja | ja | schwer |
| 05-02-01 | 4,0 Nm | ja | ja | schwer |
| 05-04-02 | 5,2 Nm | nein | nein | sehr schwer |
| 05-04-01 | 5,0 Nm | nein | nein | sehr schwer |

| **Muster bezeichnung** | **Drehmoment zum Spalten der Klebbindung (Polystyrol // gestri- chene Rauhfaser)** | **Reste beidseitig rückstandsfrei abstrippbar ? (Polystyrol // gestri- chene Rauhfaser)** |
|---|---|---|
| 05-04-05 | 0,8 Nm | ja |
| 05-02-03 | 1,4 Nm | ja |
| 05-04-04 | 2,6 Nm | ja |
| 05-02-05 | nicht ermittelt | ja |
| 05-02-02 | 3,0 Nm | ja |
| 05-04-03 | 3,6 Nm | leichte Farbausreißer |
| 05-02-01 | 4,0 Nm | leichte Farbausreißer |
| 05-04-02 | 4,0 Nm | flächiges Spalten der Tapete |
| 05-04-01 | 4,0 Nm | flächiges Spalten der Tapete |

Bis zu Drehmomenten von ca 4 Nm wird bei Verklebung von Polystyrol auf Stahl ein flächiges kohäsives Spalten der Schaumstoffzwischenträger beobachtet. Klebebandreste sind nachfolgend rückstandsfrei entsprechend Bspl. 1 von beiden Verklebungsuntergründen ablösbar. Bis zu Drehmomenten von ca 3 Nm wird subjektiv ein leichtes Spalten der Verklebung wahrgenommen, ab einem zum Lösen der Klebbindung aufzuwendenden Drehmoment von ca 5 Nm erscheint das Ablösen schwer. Bei Abdrehmomenten von ≤ ca. 3 Nm lassen sich die Verklebungen von Polystyrolplatten auf gestrichener Rauhfasertapete rückstandslos und beschädigungsfrei lösen.

### Beispiel 6

Ein Ethylen-Vinylacetathaltiger Schaumstoff vom Raumgewicht 100 kg/m³ und einer Dicke von 1,5 mm wird entsprechend Bspl. 1 mit einer Haftklebemasse bestehend aus 100 Tln. eines Pentaesters von teilhydriertem Kolophonium (Pentalyn H-E; Fa. Hercules), 80 Tln. SIS Blockcopolymer (Kraton D 1125, Fa. Shell), 20 Tln. SBS Blockcopolymer (Kraton D 1102; Fa. Shell) und 1 Tl. eines primären Antioxitantes (Irganox 1010; Fa. Ciba Additive) {= Rezeptur 2} beschichtet. Untersucht werden runde Stanzlinge unterschiedlichen Durchmessers. Ermittelt wird das Drehmoment zum Lösen der Klebbindung. Weiter wird geprüft, ob ein rückstandsfreies Wiederablösen durch Verstreckung der Klebebandreste parallel zu den Verklebungsuntergründen möglich ist. Es ergeben sich nachfolgende Eigenschaften:

| **Musterbe- zeichnung** | **Schaumstoff Handelsname** | **Schaumstoff Art** | **Hersteller / Lieferant** | **Fläche der Klebestreifens** |
|---|---|---|---|---|
| 06-01 | Alveolit TEE 1001.5 | EVAc, vemetzt | Alveo AG | 230 mm² |
| 06-02 | Alveolit TEE 1001.5 | EVAc, vemetzt | Alveo AG | 350 mm² |
| 06-03 | Alveolit TEE 1001.5 | EVAc, vemetzt | Alveo AG | 620 mm² |
| 06-04 | Alveolit TEE 1001.5 | EVAc, vemetzt | Alveo AG | 800 mm² |
| 06-05 | Alveolit TEE 1001.5 | EVAc, vemetzt | Alveo AG | 1260 mm² |
| 06-06 | Alveolit TA 3002 | PE, vemetzt | Alveo AG | 800 mm² |

| **Muster- bezeichnung** | **Schaumdicke In µm** | **Raumgewicht in kg/m**^{**3**} | **Klebmasseauftrag Seiten A // B** | **Klebmasse- rezeptur** |
|---|---|---|---|---|
| 06-01 | 1500 | 100 | 300 // 300 g/m² | {2} |
| 06-02 | 1500 | 100 | 300 // 300 g/m² | {2} |
| 06-03 | 1500 | 100 | 300 // 300 g/m² | {2} |
| 06-04 | 1500 | 100 | 300 // 300 g/m² | {2} |
| 06-05 | 1500 | 100 | 300 // 300 g/m² | {2} |
| 06-06 | 2000 | 33 | 300 // 300 g/m² | {2} |

| **Muster- bezeichnung** | **Drehmoment zum Spalten der Klebbindung Stahl // Stahl** | **Schaum spaltet ?** | **Reste beidseitig rückstandsfrei abstrippbar von Stahluntergründen ?** | **Kippscherfestigkeit Stahl // Stahl*** |
|---|---|---|---|---|
| 06-01 | 0,4 Nm | ja | ja | |
| 06-02 | 1,0 Nm | ja | ja | |
| 06-03 | 2,4 Nm | ja | ja | |
| 06-04 | 3,2 Nm | ja | ja | |
| 06-05 | 6,0 Nm | ja | ja | > 21 Tage |

| | | | | |
|---|---|---|---|---|
| *** Hebelarm = 9 cm; Belastung = 20 N; T = 23 °C; Messung nach 21 Tagen abgebrochen** | | | | |

| **Muster bezeichnung** | **Drehmoment zum Spalten der Klebbindung Stahl // gestrichene Rauhfasertapete** | **Schaum spaltet ?** | **Reste beidseitig rückstandsfrei abstrippbar von Rauhfasertapete ?** |
|---|---|---|---|
| 06-06 | 0,8 Nm | ja | ja |

Im gesamten Bereich der untersuchten Verklebungsfläche lassen sich die vorgenommenen Verklebungen durch Abdrehen und nachfolgendem Verstrecken der auf den Verklebungsuntergründen verbliebenen Klebebandhälften im wesentlichen in der Verklebungsebene rückstandsfrei wiederablösen. Großflächigere Klebebandstreifen ermöglichen die Verklebung von Gegenständen, welche an die Scher- und Kippscherfestigkeit der Klebbindung hohe Anforderungen stellen. Rückstandsfrei und zerstörungsfrei wiederablösbare Verklebungen sind ebenfalls auf empfindlichen Haftgründen möglich, wie z. B. auf gestrichener Raufasertapete (Bspl. 06-06).

### Beispiel 7

Entsprechend Bspl. 6 wird Alveolit TEE 1001.5 beidseitig mit 300 g/m² einer Klebmasse auf Basis von Rezeptur {2} beschichtet. Untersucht werden rechtekkige Stanzlinge unterschiedlicher Abmessungen. Es ergeben sich nachfolgende Eigenschaften:

| **Musterbe- zeichnung** | **Schaumstoff Handelsname** | **Schaumstoff Art Lieferant** | **Hersteller / des Klebestreifens** | **Länge // Breite // Fläche** |
|---|---|---|---|---|
| 07-01 | Alveolit TEE 1001.5 | EVAc, vernetzt | Alveo AG | 40mm // 20mm // 800 mm² |
| 07-02 | Alveolit TEE 1001.5 | EVAc, vernetzt | Alveo AG | 75mm // 11 mm // 825 mm² |

| **Muster- bezeichnung** | **Schaumdicke in µm** | **Raumgewicht in kg/m**^{**3**} | **Klebmasseauftrag Seiten A // B** | **Klebmasse- rezeptur** |
|---|---|---|---|---|
| 07-01 | 1500 | 100 | 300 // 300 g/m² | {2} |
| 07-02 | 1500 | 100 | 300 // 300 g/m² | {2} |

| **Muster- bezeichnung** | **Drehmoment zum Spalten der Klebbindung Stahl // Stahl** | **Schaum spaltet ?** | **Reste beidseitig rückstandsfrei abstrippbar von Stahluntergründen ?** |
|---|---|---|---|
| 07-01 | 3,0 Nm | ja | ja |
| 07-02 | 5,9 Nm | ja | ja |

Durch Variation der Klebestreifengeometrie läßt sich das zur Lösung der Klebbindung nötige Abdrehmoment in einem weiten Bereich steuern.

### Beispiel 8

Entsprechend Bspl. 6 wird Alveolit TEE 1001.5 beidseitig mit 300 g/m² einer Klebmasse der Rezeptur {2} beschichtet. Der verwendete Schaumstoff wird vor dem Zukaschieren der Haftklebemassen einer Perforationsstanzung unterzogen, wobei der Schaum in Produktionsrichtung und senkrecht zur Produktionsrichtung in 1,5 mm Abstand durchstanzt ist. Hierbei werden 8 mm lange Einschnitte, welche von 2 mm langen nicht durchstanzten Bereichen unterbrochen sind, in den Schaumstoff eingebracht. Es ergeben sich nachfolgende Produkteigenschaften:

| **Musterbe- zeichnung** | **Schaumstoff Handelsname** | **Schaumstoff Art** | **Hersteller / Lieferant** | **Schaumstoff durchstanzt ?** |
|---|---|---|---|---|
| 08-01 | Alveolit TEE 1001.5 | EVAc, vemetzt | Alveo AG | nein |
| 08-02 | Alveolit TEE 1001.5 | EVAc, vemetzt | Alveo AG | ja |

| **Muster- bezeichnung** | **Schaumdicke in um** | **Raumgewicht in kg/m**^{**3**} | **Klebmasseauftrag Seiten A // B** | **Klebmasse- rezeptur** |
|---|---|---|---|---|
| 08-01 | 1500 | 100 | 300 // 300 g/m² | {2} |
| 08-02 | 1500 | 100 | 300 // 300 g/m² | {2} |

| **Muster- bezeichnung** | **Drehmoment zum Spalten der Klebbindung Stahl // Stahl** | **Schaum spaltet ?** | **Reste beidseitig rückstandsfrei abstrippbar von Stahluntergründen ?** | **Kippscherfestigkeit Stahl // Stahl*** |
|---|---|---|---|---|
| 07-01 | 4,0 Nm | ja | ja | > 30 Tage |
| 07-02 | 3,1 Nm | ja | ja | > 30 Tage |

| | | | | |
|---|---|---|---|---|
| *** Hebelarm = 2 cm; Belastung = 5 N; T = 23 °C; Messung nach 30 Tagen abgebrochen** | | | | |

Durch Verwendung von perforierten Schäumen ist eine gezielte Steuerung des Abdrehmomentes möglich, ohne daß in vorliegendem Bspl. eine merkliche Reduzierung der Verklebungsfestigkeit nachgewiesen wird.

### Beispiel 9

Zur Erleichterung des Ablöseprozesses mittels Verstrecken im wesentlichen in der Verklebungsebene, werden haftklebstofffreie Bereiche in die Klebestreifen integriert, welche sich nachfolgend als Anfasser eignen, von denen aus der Ablöseprozeß vorteilhaft durchgeführt werden kann. Hierzu werden entsprechend Bspl. 1 Klebestreifen der Abmessungen 50 mm * 20 mm erstellt, welche nachfolgend an einem Streifenende beidseitig durch Aufkaschieren von 12 mm * 20 mm messenden, 25 µm starken Polyesterfolienstreifen (Hostaphan RN 25; Fa. Hoechst) einen klebfreien Anfasserbereich erhalten. Mit den so hergestellten Klebebandstreifen lassen sich Verklebungen analog zu den Bspln. 1 bis 3 realisieren. Nach dem Lösen einer Stahl // Stahl-Klebbindung durch Abdrehen spaltet der Schaumstoff im Anfasserbereich beim Auseinanderziehen der Stahlplatten kohäsiv im Schaumstoff. Ausgehend von den nicht haftklebrigen Anfasserbereichen lassen sich die Klebebandreste durch Verstrecken im wesentlichen in der Verklebungsebene rückstandsfrei von beiden Stahluntergründen ablösen.

### Beispiel 10

Erstellt werden Klebestreifen mit endständigem nicht haftklebrigen Anfasserbereich (Form und Größe entsprechend Bspl. 9). Geprüft wird auf rückstands- und zerstörungsfreies Wiederablösen von Polystyrolplatten (Basisplatten der tesa Power-Strips System-Haken), welche auf gestrichene Rauhfasertapete verklebt sind. Ermittelt wird das Drehmoment zum Lösen der Klebbindung. Weiter wird geprüft, ob ein rückstandsfreies Wiederablösen durch Verstreckung der Klebebandreste parallel zu den Verklebungsuntergründen möglich ist. Es ergeben sich nachfolgende Eigenschaften:

| **Musterbe- zeichnung** | **Schaumstoff Handelsname** | **Schaumstoff Art** | **Hersteller / Lieferant** | **mit endständigem Anfasserbereich ?** |
|---|---|---|---|---|
| 10-01 | Alveolit TA 1502 | PE, vemetzt | Alveo AG | ja 12 mm * 20 mm |
| 10-02 | Alveolit TA 3002 | PE, vemetzt | Alveo AG | ja 12 mm * 20 mm |
| 10-03 | Alveolit TA 1502 | PE, vemetzt | Alveo AG | ja 12 mm * 20 mm** |
| 10-04 | Alveolit TEE 1501.5 | EVAc, vemetzt | Alveo AG | ja 12 mm * 20 mm** |

| **Muster- bezeichnung** | **Schaumdicke in µm** | **Raumgewicht in kg/m**^{**3**} | **Klebmasseauftrag Seiten A // B** | **Klebmasse- rezeptur** |
|---|---|---|---|---|
| 10-01 | 2000 | 67 | 300 // 300 g/m² | {1} |
| 10-02 | 2000 | 33 | 300 // 300 g/m² | {1} |
| 10-03 | 2000 | 67 | 300 // 300 g/m² | {1} |
| 10-04 | 1500 | 67 | 300 // 300 g/m² | {1} |

| **Muster- bezeichnung** | **Drehmoment zum Spalten der Klebbindung Stahl // Stahl** | **Schaum spaltet?** | **Reste beidseitig rückstandsfrei abstrippbar ? Polystyrol // gestri- chene Rauhfaser)** |
|---|---|---|---|
| 10-01 | 2,0 Nm | ja | nein* |
| 10-02 | 1,2 Nm | ja | ja |
| 10-03 | 2,1 Nm | ja | ja |
| 10-04 | 2,9 Nm | ja | ja |

| | | | |
|---|---|---|---|
| *** leichte Farbausrisse aus der gestrichenen Rauhfasertapete; partielles Spalten der Tapete** **** Schaumstoff im Anfasserbereich in der Ebene des Schaumstoffes ca mittig durchtrennt** | | | |

Schaumstoffzwischenträger mit niedrigem Raumgewicht und damit niedriger Eigenfestigkeit, ermöglichen die Fertigung von doppelseitig haftklebrigen Selbstklebebändern, welche sich auch von empfindlichen Untergründen, wie z. B. gestrichener Rauhfasertapete rückstands- und zerstörungsfrei wiederablösen lassen (Bspl. 10-02). Ist die Verwendung eines Schaumstoffträgers mit höherem Raumgewicht notwendig, so lassen sich durch flächiges Einschneiden des Schaumstoffes parallel zur Schaumstoffoberfläche im Bereich der Anfasser (Einschnitte etwa mittig im Schaumstoff verlaufend), auch Schaumstoffzwischenträger mit höherem Raumgewicht und damit höherer Eigenfestigkeit für entsprechend rückstands- und zerstörungsfrei lösbare Verklebungen auf empfindlicher Oberflächen einsetzen.

### Beispiel 11a

Klebestreifen der Abmessungen 40 mm * 20 mm werden entsprechend Bspl. 2b mit einseitig klebfreien Anfasserbereichen (Inertisierung versetzt gegenüberliegender Klebfolienecken) versehen. Es wird die zum Abhebeln der Klebbindung (Holz // Holz Verklebung) notwendige Kraft bestimmt. Vergleichend untersucht werden Klebestreifen, welche Schaumstoffe nutzen, die senkrecht zur Schaumstoffoberfläche perforiert sind, Klebestreifen, welche schräg im Winkel von ca 45° zur Schaumstoffoberfläche perforiert sind und Klebestreifen deren Schaumstoffzwischenträger nicht perforiert wurde. Es ergeben sich nachfolgende Ergebnisse:

| **Musterbezeichnung** | **Schaumstoff Handelsname** | **Schaumstoff Art** | **Hersteller / Lieferant** | **mit Anfasser im Kantenbereich ?** |
|---|---|---|---|---|
| 11-01 | Alveolit TA 1001.5 | PE, vernetzt | Alveo AG | je einseitig 4∗4∗5.6mm |
| 11-01a | Alveolit TA 1001.5 | PE, vernetzt | Alveo AG | je einseitig 4∗4∗5.6mm |
| 11-02 | Alveolit TA 1001.5 | PE, vernetzt | Alveo AG | je einseitig 4∗4∗5.6mm |
| 11-03 | Alveolit TA 1001.5 | PE, vernetzt | Alveo AG | je einseitig 4∗4∗5.6mm |
| 11-04 | Alveolit TA 1501.5 | PE, vernetzt | Alveo AG | je einseitig 4∗4∗5.6mm |
| 11-04 | Alveolit TA 3002 | PE, vernetzt | Alveo AG | je einseitig 4∗4∗5.6mm |

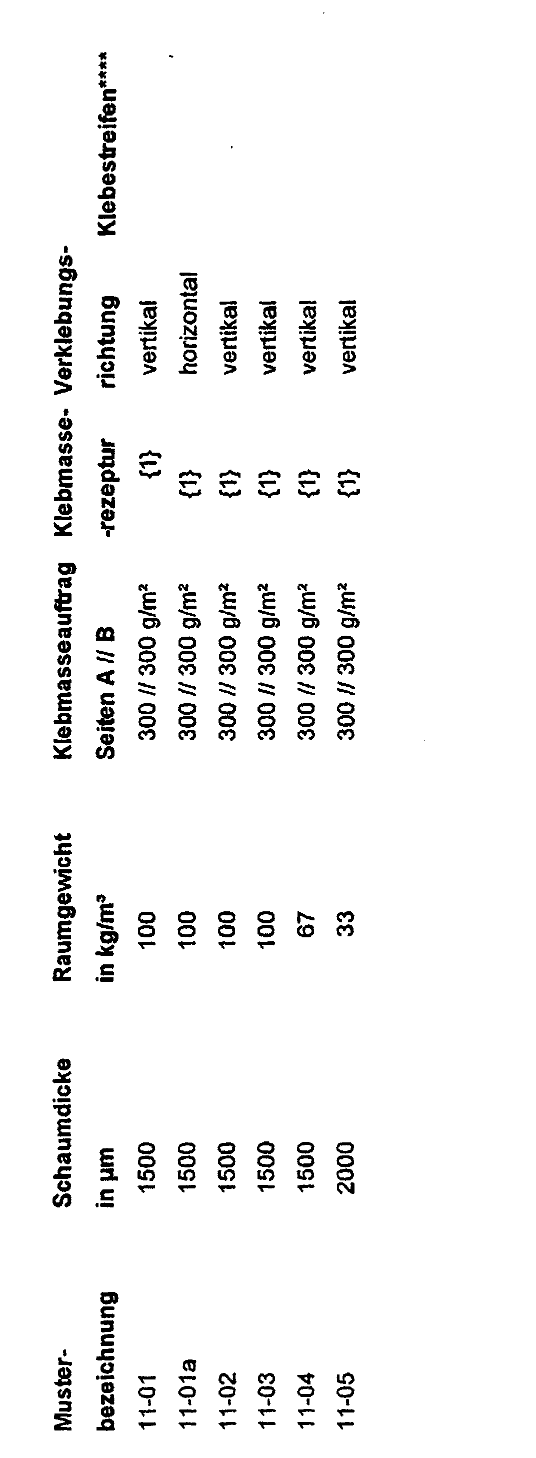

| **Muster bezeichnung** | **Kraft zum Spalten der Klebbindung Holz // Holz*** | **Schaum spaltet ?** | **Reste beidseitig rückstandsfrei abstrippbar ? Holz // Holz** | **Schaumstoffträger eingeschnitten ?** |
|---|---|---|---|---|
| 11-01 | 35 N | ja | ja | nein |
| 11-01a | 18 N | ja | ja | nein |
| 11-02 | 27 N | ja | ja | ja** |
| 11-03 | 35 N | ja | ja | ja*** |
| 11-04 | 22 N | ja | ja | nein |
| 11-05 | 10 N | ja | ja | nein |

| | | | | |
|---|---|---|---|---|
| *** Hebelarm = 200 mm ** Schaumstoff in parallelen Linien gleichmäßig in 1.5 mm Abstand vollständig durchschnitten. Perforationswinkel = 45° zur Schaumstoffoberfläche. Einschnitte senkrecht zur Hebelebene von unten (verklebter Gegenstand bzw. Hebel) nach oben (Wandseite bzw. fixer Verklebungsuntergrund) verlaufend. *** Schaumstoff in parallelen Linien gleichmäßig in 1.5 mm Abstand vollständig durchschnitten. Perforationswinkel = 90° (senkrecht) zur Schaumstoffoberfläche. Einschnitte senkrecht zur Hebelebene verlaufend. ****Vertikale Verklebung: Klebstreifenbreite = 40 mm, Klebstreifenhöhe = 20 mm; Horizontale Verklebung: Klebstreifenbreite = 20 mm, Klebstreifenhöhe = 40 mm** | | | | |

Die untersuchten Klebestreifen spalten beim Abhebeln kohäsiv im Schaumstoff. Nachfolgend ist ein rückstandsfreies Wiederablösen der Klebebandreste durch Verstrecken selbiger in der Verklebungsebene ausgehend von den integrierten Anfasserstreifen möglich. Durch schräges Einschneiden der verwendeten Schaumstoffe ist eine gezielte Steuerung der Ablösekräfte möglich. Mit sinkendem Raumgewicht der verwendeten Schaumstoffe sinkt die zum Spalten der Klebbindung benötigte Kraft erheblich.

### Beispiel 11b

Die auf der Vorderseite mit einer Postkarte versehen Buchenholzplatte aus Bspl. 2 wird rückseitig mit einem Haftklebestreifen analog Bspl. 11a - Muster 11-05, jedoch der Abmessungen 100 mm * 15 mm (Breite * Höhe) versehen. Der Klebestreifen wird dabei rückseitig und bündig an das obere Ende der Buchenholzpaltte verklebt. Nach Entfernen des zweiten Abdeckpapieres wird die Buchenholzplatte mit festem Handandruck auf einen lackierten Holzuntergrund verklebt. Die so vorgenommene Verklebung läßt sich durch Abhebeln des Bildes ausgehen von dessen Unterseite spalten. Die auf beiden Verklebungsuntergründen verbliebenen Klebebandreste lassen sich ausgehend von den in beide Klebebandhälften integrierten Anfasserbereichen rückstands- und zerstörungsfrei durch Verstrecken im wesentlichen in der Verklebungsebene ablösen.

### Beispiel 12

Alveolit TA 1001.6, TA 1501.5 und 3002 werden entsprechend Bspl. 1 mit Haftklebemasse (Rezeptur 1) beschichtet. Untersucht werden Klebestreifen der Abmessungen 50 mm * 20 mm mit in einer Ecke integriertem beidseitigem nicht haftklebrigen Anfasserbereich. Ermittelt wird die Kraft, welche zum Spalten des Klebverbundes durch Abschälen von auf polierten Stahlplatten verklebten Aluminiumstreifen benötigt wird. Es ergeben sich nachfolgende Eigenschaften:

| **Musterbe- zeichnung** | **Schaumstoff Handelsname** | **Schaumstoff Art** | **Hersteller / Lieferant** | **mit Anfasser im Kantenbereich ?** |
|---|---|---|---|---|
| 12-01 | Alveolit TA 1001.6 | PE, vemetzt | Alveo AG | endständig 4*4*5.6mm* |
| 12-02 | Alveolit TA 1501.5 | PE, vernetzt | Alveo AG | endständig 4*4*5.6mm* |
| 12-03 | Alveolit TA 3002 | PE, vemetzt | Alveo AG | endständig 4*4*5.6mm* |

| | | | | |
|---|---|---|---|---|
| *** beidseitig in einer Kante** | | | | |

| **Muster- bezeichnung** | **Schaumdicke in µm** | **Raumgewicht in kg/m**^{**3**} | **Klebmasseauftrag Seiten A // B** | **Klebmasse- rezeptur** |
|---|---|---|---|---|
| 12-01 | 1600 | 100 | 300 // 300 g/m² | {1} |
| 12-02 | 1500 | 67 | 300 // 300 g/m² | {1} |
| 12-03 | 2000 | 33 | 300 // 300 g/m² | {1} |

| **Muster bezeichnung** | **Kraft zum Spalten der Klebbindung Alu // Stahl Einreißkraft // Weiterreißkraft Alu // Stahl** | **Schaum spaltet ?** | **Reste beidseitig rückstandsfrei abstrippbar ?** |
|---|---|---|---|
| 12-01 | 20 N/cm // 10 N/cm | ja | ja |
| 12-02 | 13 N/cm // 9 N/cm | ja | ja |
| 12-03 | 4 N/cm // 2 N/cm | ja | ja |

Abschälkräfte durchlaufen ein Maximum zu Beginn der Messung (= Einreißkraft). Klebestreifen spalten beim Abschälen der Aluminiumfolie vom Stahluntergrund kohäsiv im Schaum. Klebebandreste lassen sich nachfolgend ausgehend von den integrierten Anfasserbereichen rückstandsfrei von beiden Verklebungsuntergründen durch Verstrecken im wesentlichen in der Verklebungsebene ablösen. Durch Abschälen lassen sich bevorzugt nicht ebene Verklebungen rückstandsfrei- und beschädigungsfrei wiederablösen.

## Patentansprüche

1. Rückstandsfrei und zerstörungsfrei wiederablösbares doppelseitiges Klebeband (Fix) für auf zu verklebenden Substraten verdecktes Verkleben mit hoher Schälfestigkeit, hoher Scherfestigkeit und hoher Kippscherfestigkeit, **gekennzeichnet durch**
a) einen Zwischenträger, der bei Einwirkung von Torsionskräften, Hebelkräften und/oder Schälkräften spaltet und der aus einem schaumstoffhaltigen Trägermaterial besteht, wobei beim Spalten des schaumstoffhaltigen Trägermaterials das Klebeband in zwei Teile spaltet und sich sowohl auf dem verklebten Gegenstand als auch auf dem Haftgrund jeweils die ursprünglich auf den jeweiligen Haftgrund aufgebrachte Haftklebemasse mit Resten des zerstörten schaumstoffhaltigen Trägermaterial befindet,
b) beidseits auf dem Zwischenträger beschichtete Haftklebemasse, die **durch** Verstrecken in Richtung der Verklebungsebene rückstands- und zerstörungsfrei lösbar ist.

2. Klebeband nach Anspruch 1, **dadurch gekennzeichnet, daß** der Zwischenträger aus einem Kunststoff-Schaum besteht.

3. Klebeband nach Anspruch 1, **dadurch gekennzeichnet, daß** der Zwischenträger aus einem geschäumten homo- oder copolymeren Olefin besteht.

4. Klebeband nach Anspruch 1, **dadurch gekennzeichnet, daß** der Zwischenträger eine Dicke von 175 um bis 10 mm und ein Raumgewicht von 20 bis 400 kg/m³ aufweist.

5. Klebeband nach Anspruch 1, **dadurch gekennzeichnet, daß** die Haftklebemasse auf den beiden Seiten des Zwischenträgers gleich oder verschieden ist.

6. Klebeband nach Anspruch 1, **dadurch gekennzeichnet, daß** die Haftklebemasse eine solche auf Basis von Blockcopolymeren ist.

7. Klebeband nach Anspruch 1, **dadurch gekennzeichnet, daß** zwischen einer oder beiden der Haftklebemassen und Zwischenträger ein dehnbarer Folienträger angeordnet ist, wobei die Haftklebemasse insbesondere eine solche auf Acrylat-Basis oder Kautschuk-Basis ist.

8. Klebeband nach Anspruch 1, **dadurch gekennzeichnet, daß** einzelne Klebeband-Abschnitte einen nicht-klebenden Anfasser aufweisen.

9. Klebeband nach Anspruch 1, **dadurch gekennzeichnet, daß** der Zwischenträger vorbehandelt ist, um seine mechanische Festigkeit zu reduzieren.

10. Verwendung eines Klebebandes nach einem der Ansprüche 1 - 9 zum rückstandsfrei und zerstörungsfrei wiederablösbaren verdeckten Verkleben zweier Substrate, deren Trennung zunächst durch Abdrehen bzw. Abhebeln oder durch Abschälen so erfolgt, daß hierdurch ein Spalten des Zwischenträgers bewirkt wird, worauf die Klebeband-Reste an beiden Substraten durch Ziehen an dem Klebeband-Rest in Richtung der Verklebungsebene entfernt werden.

## Claims

1. Double-sided adhesive tape (fixer) which can be re-released without residue or destruction for hidden bonding on substrates that are to be bonded, with high peel strength, high shear strength and high tip-shear strength, **characterized by**
a) an intermediate support which cleaves under the action of torsional forces, lever forces and/or peel forces and is composed of a foam-containing support material, cleaving of the foam-containing support material being accompanied by cleaving of the adhesive tape into two parts, both the bonded article and the substrate each carrying the pressure-sensitive adhesive composition originally applied to the respective substrate, with residues of the destroyed foam-containing support material,
b) pressure-sensitive adhesive composition coated on both sides of the intermediate support, which composition can be released without residue or destruction by stretching in the direction of the bond plane.

2. Adhesive tape according to Claim 1, **characterized in that** the intermediate support consists of a polymer foam.

3. Adhesive tape according to Claim 1, **characterized in that** the intermediate support consists of a foamed homopolymeric or copolymeric olefin.

4. Adhesive tape according to Claim 1, **characterized in that** the intermediate support has a thickness of from 175 µm to 10 mm and a density of from 20 to 400 kg/m³.

5. Adhesive tape according to Claim 1, **characterized in that** the pressure-sensitive adhesive composition on the two sides of the intermediate support is the same or different.

6. Adhesive tape according to Claim 1, **characterized in that** the pressure-sensitive adhesive composition is one based on block copolymers.

7. Adhesive tape according to Claim 1, **characterized in that** between one or both of the pressure-sensitive adhesive compositions and intermediate supports there is arranged an extensible film backing, the pressure-sensitive adhesive composition being, in particular, one based on acrylate or on rubber.

8. Adhesive tape according to Claim 1, **characterized in that** individual adhesive tape sections have a non-adhesive grip tab.

9. Adhesive tape according to Claim 1, **characterized in that** the intermediate support has been pretreated in order to reduce its mechanical strength.

10. Use of an adhesive tape according to one of Claims 1-9 for the residuelessly and non-destructively re-releasable, hidden bonding of two substrates whose separation takes place first of all by twisting or levering or by peeling in such a way as to bring about cleavage of the intermediate support, after which the residues of adhesive tape on both substrates are removed by pulling on the adhesive tape residue in the direction of the bond plane.

## Revendications

1. Ruban adhésif (Fix) double face, détachable sans résidus ni endommagement, pour réaliser sur des substrats de collage des collages invisibles à haute résistance au pelage, haute résistance au cisaillement et haute résistance au cisaillement par oscillation, **caractérisé en ce que**
a) un support intermédiaire, qui se scinde sous l'action de forces de torsion, de forces de levage et /ou de forces de pelage, et qui consiste en un matériau de support contenant une mousse, où lors de la scission du matériau de support contenant une mousse, la bande adhésive se divise en deux parties et il se trouve, tant sur l'objet collé que sur le substrat, à chaque fois la masse auto-adhésive appliquée à l'origine sur le substrat correspondant avec des restes du matériau de support mousse détruit,
b) une masse auto-adhésive appliquée des deux côtés sur le support intermédiaire, et qui est détachable sans résidus ni dommages par étirement dans la direction du plan de collage.

2. Ruban adhésif selon la revendication 1, **caractérisé en ce que** le support intermédiaire est constitué d'une mousse synthétique.

3. Ruban adhésif selon la revendication 1, **caractérisé en ce que** le support intermédiaire est constitué d'une oléfine homo- ou copolymère expansée.

4. Ruban adhésif selon la revendication 1, **caractérisé en ce que** le support intermédiaire présente une épaisseur de 175 µm à 10 mm et une densité en volume de 20 à 400 kg/m³.

5. Ruban adhésif selon la revendication 1, **caractérisé en ce que** la masse auto-adhésive est identique ou différente sur les deux faces du support intermédiaire.

6. Ruban adhésif selon la revendication 1, **caractérisé en ce que** la masse auto-adhésive est à base de copolymères blocs.

7. Ruban adhésif selon la revendication 1, **caractérisé en ce qu'**entre l'une ou les deux des masses auto-adhésives et le support intermédiaire est placée une feuille de support extensible, la masse auto-adhésive étant en particulier à base d'acrylate ou à base de caoutchouc.

8. Ruban adhésif selon la revendication 1, **caractérisé en ce que** les sections individuelles de ruban adhésif présentent une zone d'amorce de décollement non adhérente.

9. Ruban adhésif selon la revendication 1, **caractérisé en ce que** le support intermédiaire est prétraité en vue de réduire sa résistance mécanique.

10. Utilisation d'un ruban adhésif selon l'une des revendications 1 à 9 pour le collage invisible et détachable sans résidus ni dommages de deux substrats, dont la séparation est d'abord réalisée par torsion ou soulèvement ou par pelage, de manière qu'il se produise une scission du support intermédiaire, après quoi les restes de bande adhésive sur les deux substrats sont détachés par traction sur le reste de bande adhésive en direction du plan de collage.
